# EUROPÄISCHE PATENTSCHRIFT

(11) **EP 0 980 124 B1**
(45) Veröffentlichungstag und Bekanntmachung des Hinweises auf die Patenterteilung: **13.09.2006**
(21) Anmeldenummer: 99105112.9
(22) Anmeldetag: 25.03.1999
(51) Int. Cl.: H02B 1/20, H02B 1/056

(54) **Kontaktiereinrichtung, insbesondere für Sammelschienen-Adapter**
Contacting device, especially for a bus bar adapter
Dispositif de mise en contact, notamment pour adaptateur des barres de distribution

(30) Priorität: 11.08.1998 DE 19836383
(43) Veröffentlichungstag der Anmeldung: 16.02.2000
(73) Patentinhaber: Wöhner GmbH & Co. KG Elektrotechnische Systeme, 96472 Rödental (DE)
(72) Erfinder: Büttner, Alex, 96472 Rödental (DE)
(74) Vertreter: Reinhard - Skuhra - Weise & Partner

(56) Entgegenhaltungen:
- DE-C- 4 329 428
- FR-A- 2 308 173

## Beschreibung

Die Erfindung betrifft eine Kontaktiereinrichtung, insbesondere für Sammelschienen-Adapter, gemäß dem Oberbegriff des Patentanspruchs 1 (siehe DE-C-4329 428).

Bei bekannten Sammelschienen-Adaptern ist das Adapter-Gehäuse mit vom Gehäuse nach unten abstrebenden Klemmbügeln versehen, mit deren Hilfe das Adapter-Gehäuse auf vorhandene Sammelschienen aufgesteckt wird, derart, daß die Klemmbügel die Sammelschienen untergreifen, wodurch ein Kontakt zwischen jeder Sammelschiene und einem Kontaktbügel oder dergleichen gehäuseseitig gewährleistet wird.
Bei derartigen Sammelschienen-Adaptern ist der Abstand zwischen dem Adapter-Gehäuse und den Klemmbügeln bzw. Klemmfüßen so gestaltet, daß sie standardmäßig für eine 5 mm betragende Dicke der Sammelschienen ausgelegt sind. Bei einer bekannten Art solcher Adapter sind die Klemmbügel mit in Richtung auf das Adapter-Gehäuse weisenden Stegen versehen, welche den Raum für eine 5 mm starke Sammelschiene definieren. Für den Einsatz des Adapter-Gehäuses bei Stromsammelschienen mit einer Schienenstärke von 10 mm ist es hierbei erforderlich, die Stege der Klemmbügel über eine definierte Sollbruchstelle abzubrechen, wodurch ein Klemmraum für 10 mm dicke Sammelschienen entsteht.

Bei einer anderen Art von Sammelschienen-Adaptern lassen sich die Klemmbügel bzw. Füße durch quer zur Ebene des Gehäuses verlaufende Klemmschrauben verstellen, wobei die Klemmschrauben von oben, d.h. von derjenigen Seite her verstellbar sind, auf welcher Installationsgeräte oder dergleichen montiert werden. Diese Konstruktion hat den Nachteil, daß im Falle einer Lockerung der Klemmbügel gegenüber den Sammelschienen die Klemmschrauben nicht mehr zugänglich und damit nicht mehr nachgezogen werden können, sobald der Adapter mit Installationsgeräten versehen ist.

Eine weitere Art von Sammelschienen-Adaptern ist standardmäßig entweder für Sammelschienen mit einer Dicke von 5 mm oder für Sammelschienen mit einer Dicke von 10 mm ausgelegt, wodurch die Bevorratung erhöht wird.

Der Erfindung liegt demgegenüber die Aufgabe zugrunde, eine Kontaktiereinrichtung, insbesondere für Sammelschienen-Adapter zu schaffen, die auf unterschiedliche Stromschienendicken eingestellt werden kann.

Diese Aufgabe wird erfindungsgemäß durch die im kennzeichnenden Teil des Patentanspruchs 1 angegebenen Merkmale gelöst.

Weitere Ausgestaltungen der Erfindung ergeben sich aus den Unteransprüchen.

Die Erfindung schafft eine Kontaktiereinrichtung, insbesondere für Sammelschienen-Adapter oder für direktkontaktierbare Schaltgeräte, die auf wenigstens zwei unterschiedliche Dicken von Sammelschienen abstimmbar ist und sich damit zumindest für zwei unterschiedliche Sammelschienendicken verwenden läßt. Hierdurch wird eine Höhenverstellung der Klemmbügel oder das Abbrechen von Stegen entlang von Sollbruchstellen überflüssig, und es wird eine sichere Befestigung des Adapters gegenüber den Stromsammelschienen gewährleistet.

Erfindungsgemäß besteht jeder Klemmbügel aus einem in das Adapter-Gehäuse einzusetzenden ersten Klemmbügelteil, nachfolgend als Klemmteil bezeichnet, und einem an dem Klemmteil drehfähig angebrachten Schwenkbügel, wobei die Schenkellänge des Klemmteiles auf die größere Sammelschienendicke abgestellt ist, während die Schenkellänge des verstellbaren Schwenkbügels auf die kleinere Sammelschienendicke abgestimmt ist.

Um das Adapter-Gehäuse auf Sammelschienen mit einer kleineren Dicke aufzusetzen, ist es erfindungsgemäß lediglich notwendig, den gegenüber dem Klemmteil verstellbaren Schwenkbügel in eine Betriebsposition zu verschwenken, wodurch automatisch der für die Sammelschienen definierte Raum auf einen Abstand eingestellt wird, welcher der kleineren Sammelschienendicke entspricht. Gemäß einer bevorzugten Ausführungsform der Erfindung ist jeder Klemmbügel mit einer Arretiereinrichtung versehen, die nach Verstellen des Schwenkbügels in seine wirksame Stellung ein Zurückverschwenken des Schwenkbügels verhindert und damit einen sicheren Sitz des Adapter-Gehäuses auf Sammelschienen mit der kleineren Schienendicke sicherstellt.

Bei einer weiteren, bevorzugten Ausführungsform läßt sich jedes Klemmteil mit zugehörigem Schwenkbügel auf einfache Weise von der zur Befestigung von Installationsgeräten oder dergleichen bestimmten Seite in eine Öffnung in das Gehäuse einsetzen, wobei jedes Klemmteil selbstsichernd und gegen eine Herausverlagerung aus der Unterseite des Gehäuses heraus in den Sammelschienen-Adapter eingesetzt werden kann. Dies hat zum Vorteil, daß bei dieser Ausführungsform Klemmteil und Schwenkbügel gegenüber dem Adaptergehäuse separat herstellbar und nach Fertigstellung des Adapter-Gehäuses in dieses auf einfache Weise eingesetzt werden können, was die Gesamtkonstruktion des Sammelschienen-Adapters wesentlich vereinfacht.

Die erfindungsgemäße Kontaktiereinrichtung hat den weiteren Vorteil, daß sie wechselweise oder nacheinander für Sammelschienen mit wenigstens zwei unterschiedlichen Sammelschienendicken verwendet werden kann, d.h. daß sie auch dann, wenn sie auf einer Sammelschiene mit kleinerer Dicke eingesetzt worden ist, später wieder ohne weitere Umrüstung auf Sammelschienen mit größerer Dicke eingesetzt werden kann.

Im folgenden werden bevorzugte Ausführungsformen der erfindungsgemäßen Kontaktiereinrichtung anhand der Zeichnung zur Erläuterung weiterer Merkmale beschrieben. Es zeigen:
- Figur 1: eine schematische Seitenschnittansicht durch eine erfindungsgemäße Kontakteinrichtung für einen Sammelschienen-Adapter in Verbindung mit einem auf den Adapter aufgesetzten NH-Sicherungslasttrennschalter,
- Figur 2: eine Teildarstellung zur Erläuterung von Einzelheiten der Kontaktiereinrichtung, wie sie bei einem Sammelschienen-Adapter gemäß Figur 1 je Sammelschiene vorgesehen ist, und zwar in Verbindung mit dem Einsatz des Sammelschienen-Adapters an Sammelschienen mit einer größeren Sammelschienendicke,
- Figur 3: eine im wesentlichen Figur 2 entsprechende Darstellung zur Erläuterung des Einsatzes der Kontaktiereinrichtung mit Sammelschienen mit einer kleineren Sammelschienendicke,
- Figur 4: eine Seitenansicht des Klemmteiles mit Schwenkbügel,
- Figur 5: eine Draufsicht auf das Klemmteil,
- Figur 6: eine Seitenansicht des Schwenkbügels,
- Figur 7: eine Teilschnittansicht des Schwenkbügels,
- Figur 8: eine im Schnitt gehaltene Ansicht einer Kontaktlamelle,
- Figur 9: eine Ansicht der Kontaktlamelle nach Figur 8, von unten betrachtet.

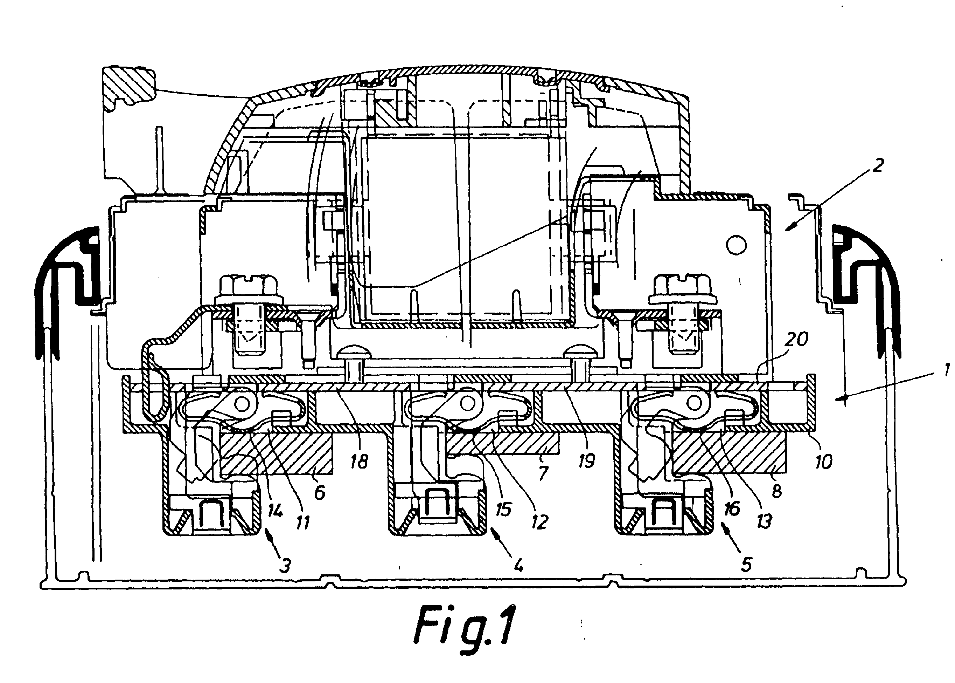

Unter Bezugnahme auf Figur 1 wird nachfolgend die erfindungsgemäße Kontaktiereinrichtung erläutert. Figur 1 zeigt eine Seitenschnittansicht eines Sammelschienen-Adapters 1 in Verbindung mit einem Installationsgerät, vorzugsweise einem NH-Sicherungslasttrennschalter 2 zur Erläuterung eines bevorzugten Einsatzes der Kontaktiereinrichtung in Verbindung mit einem Sammelschienen-Adapter für NH-Sicherungslasttrennschalter.

Die erfindungsgemäße Kontaktiereinrichtung läßt sich auch bei anderen, direktkontaktierbaren Schaltgeräten oder dergleichen verwenden.

Gemäß Figur 1 weist der Sammelschienen-Adapter 1 ein Gehäuse 10 auf, von welchem nach unten verschiedene Klemmbügel oder Klemmfüße 3, 4, 5 abstehen. Bei der dargestellten Ausführungsform sind drei Klemmbügel 3, 4, 5 vorgesehen, die zum Einsatz des Adapters auf eine jeweils zugeordnete Sammelschiene 6, 7, 8 vorbestimmter Breite aufgezogen werden, wenn der Adapter auf das durch die Sammelschienen 6, 7, 8 gebildete SammelschienenSystem aufgesetzt werden soll.

In an sich bekannter Weise sind die Klemmbügel 3, 4, 5, auch Klemmfüße genannt, an der Unterseite des Adapters 1 von diesem im wesentlichen senkrecht abstehend angeordnet, wobei die Klemmbügel 3, 4, 5 üblicherweise in Richtung der Sammelschienen 6, 7, 8 zueinander versetzt vorgesehen sind, wodurch eine sichere Halterung des Adapter-Gehäuses 10 gegenüber den Sammelschienen 6, 7, 8 gewährleistet wird.

Die Klemmbügel 3, 4, 5 bestehen aus einem Material wie Kunststoff ebenso wie das Gehäuse 10, wodurch sie gegenüber den Sammelschienen 6, 7, 8 elektrisch isoliert sind. Die Klemmbügel 3, 4, 5 haben im wesentlichen L-förmige Gestalt und bewirken dadurch ein teilweises Untergreifen der Sammelschienen 6, 7, 8, wie dies in Figur 1 gezeigt ist. In dem Adapter-Gehäuse 10 befinden sich in einer dem jeweiligen Klemmbügel 3, 4, 5 zugeordneten Position Öffnungen 11, 12, 13, die dazu vorgesehen sind, innerhalb des Adapter-Gehäuses 10 befindliche Kontaktfederelemente 14, 15, 16 mit einem definierten Kontaktabschnitt aufzunehmen und letztere nach dem Aufsetzen des Gehäuses 10 auf die Sammelschienen 6, 7, 8 mit der jeweiligen Sammelschiene in elektrischen Kontakt zu bringen.

Bei der dargestellten bevorzugten Ausführungsform sind die Kontaktelemente 14, 15, 16 als separate Teile in das Gehäuse 10 eingesetzt und stehen an ihrer Oberseite mit jeweils einer zugeordneten Verbindungsschiene 18, 19, 20 in elektrischen Kontakt. Jede Verbindungsschiene 18, 19, 20 hat in an sich bekannter Weise eine Verbindung mit dem zugehörigen Anschluß des betreffenden Installationsgerätes, im vorliegenden Fall eines NH-Sicherungslasttrennschalters 2.

Einzelheiten des Sicherungslasttrennschalters 2 müssen nicht beschrieben werden. Es ist jedoch ersichtlich, daß der Sicherungslasttrennschalter 2 über die Verbindungsschienen 18, 19, 20 mit den jeweiligen Sammelschienen 6, 7, 8 in elektrischer Verbindung steht und dadurch im Falle eines Sicherungslasttrennschalters pro Stromkreis eine Sicherung in dem nicht weiter gezeigten Sicherungslasttrennschalter 2 definiert ist.

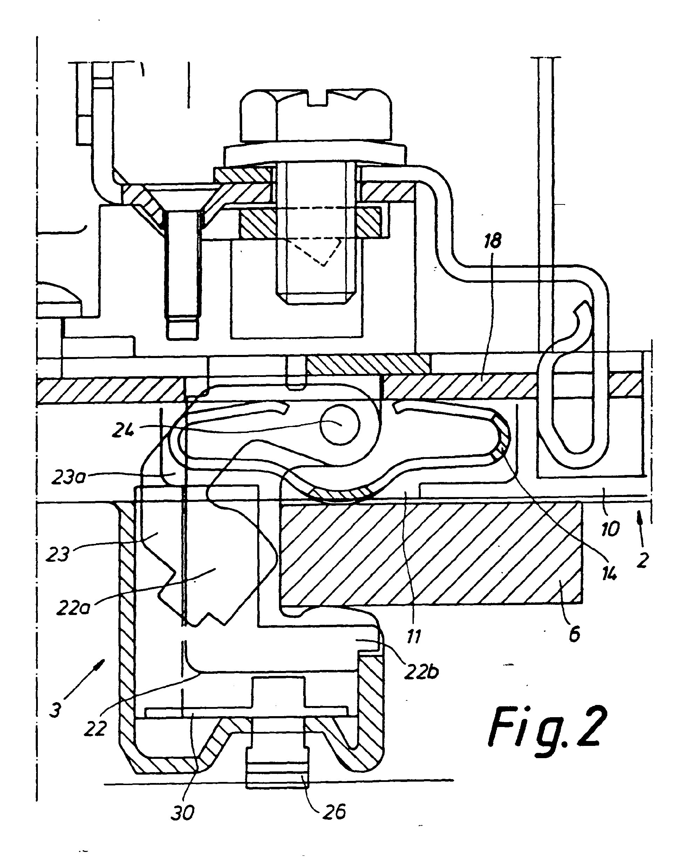

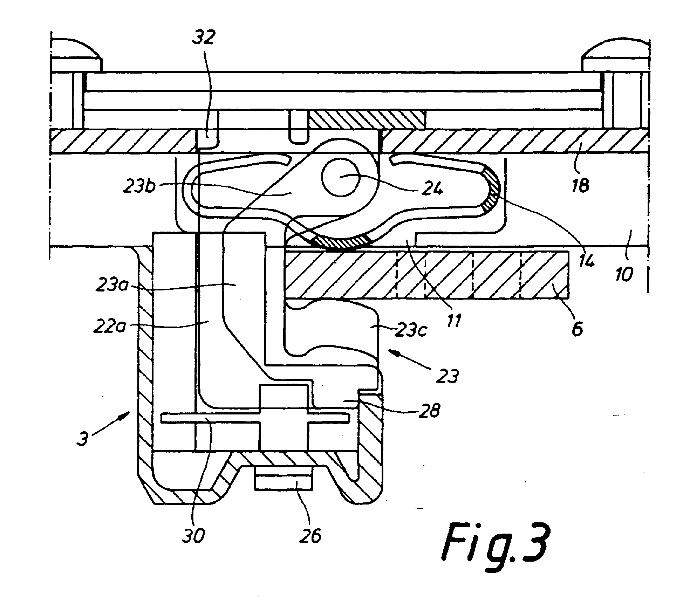

Wie sich aus Figur 1 ergibt, umgibt jeder Klemmbügel 3, 4, 5 vorzugsweise aus Metall bestehende Klemmteile, deren Aufbau und Zuordnung nachfolgend in Verbindung mit Figur 2 und 3 näher beschrieben wird.

Figur 2 zeigt Einzelheiten der erfindungsgemäßen Kontaktiereinrichtung. Der in Figur 2 gezeigte Klemmbügel 3 nimmt ein im wesentlichen L-förmiges Klemmteil 22 auf, welches in der in Figur 2 gezeigten Stellung des Adapters praktisch feststehend gegenüber dem Gehäuse 2 vorgesehen bzw. angeordnet ist, und ein gegenüber dem Klemmteil bzw. Klemmfuß 22 verstellbaren Schwenkbügel 23.

Üblicherweise sind Sammelschienen mit einer Dicke von 10 mm oder mit einer Dicke von 5 mm im Einsatz. Figur 2 zeigt die Verwendung der erfindungsgemäßen Kontaktiereinrichtung in Verbindung mit einer Sammelschiene 6, die eine Dicke von 10 mm besitzt. In diesem Fall untergreift das Klemmteil 22 die Sammelschiene 6 zumindest teilweise. Das Klemmteil 22 besteht aus einem vom Gehäuse 2 nach unten etwa vertikal abstrebenden Schenkelabschnitt 22a und einem die Sammelschiene 6 teilweise untergreifenden Schenkelabschnitt 22b. An dem Schenkelabschnitt 22a ist der Schwenkbügel 23 drehfähig angelenkt. Der Schwenkbügel 23 ist um eine mit 24 bezeichnete Achse verschwenkbar, die parallel zur Ebene der Sammelschienen 6, 7, 8 und bei der dargestellten Ausführungsform oberhalb der Sammelschienen 6, 7, 8 definiert ist. Der Schwenkbügel 23 hat im wesentlichen L- oder U-förmige Gestalt, von der Seite betrachtet, wobei der mit 23a bezeichnete Schenkelabschnitt eine kürzere Länge hat im Vergleich zum Schenkelabschnitt 22a des Klemmteiles 22. Die Drehachse 24 für den Schwenkbügel 23 befindet sich vorzugsweise in Höhe etwa des Kontaktelementes 14, d.h. im Bereich der Gehäuseunterseite oberhalb der Sammelschienenebene.

Wie sich aus einer Betrachtung von Figur 2 ergibt, ist der Schenkelabschnitt 22a von einer solchen Länge, die im wesentlichen der im vorliegenden Fall 10 mm betragenden Stärke der Stromschiene 6 entspricht. Die Länge bzw. Höhe des Schenkelabschnittes 23a ist hingegen derart gewählt, daß sie in etwa der Dicke einer Stromschiene mit 5 mm entspricht, wobei die vorstehenden Größenangaben nur beispielhaft sind. Wenn also die Kontaktiereinrichtung entsprechend Figur 2 Anwendung findet in Verbindung mit Sammelschienen 6, 7, 8 mit einer Stärke von beispielsweise 10 mm, untergreift das Klemmteil 22 die betreffende Sammelschiene 6 usw., während der Schwenkbügel 23 ohne Funktion ist. Die Sammelschiene 6 steht hierbei in elektrischem Kontakt mit dem Kontaktelement 14.

Bei der dargestellten Ausführungsform ist der Schwenkbügel 23 in eine im Uhrzeigersinn in Figur 2 definierte Endposition verlagert, wobei seine Verschwenkung im Uhrzeigersinn durch eine Wand des Klemmteiles 22 oder durch einen anderen Anschlag arretiert wird, während die Bewegung des Schwenkbügels 23 entgegen dem Uhrzeigersinn durch die Sammelschiene 6 verhindert wird, wie sich aus Figur 2 ohne weiteres ergibt.

Figur 3 zeigt eine Figur 2 entsprechende Darstellung beim Einsatz eines Sammelschienen-Adapters in Verbindung mit einer Sammelschienendicke von beispielsweise 5 mm. In der in Figur 3 gezeigten Betriebsstellung ist der Schwenkbügel 23 aus der in Figur 2 gezeigten Position entgegen dem Uhrzeigersinn derart verschwenkt, daß er die Sammelschiene 6 untergreift, wobei der mit 23a bezeichnete Schenkelabschnitt im wesentlichen vertikal und parallel zum Schenkelabschnitt 22a steht. Um den Schwenkbügel 23 in der in Figur 3 gezeigten Position zu halten, d.h. eine versehentliche Drehbewegung im Uhrzeigersinn aus dieser Position heraus zu verhindern, was zur Folge hätte, daß die Klemmwirkung durch den Schwenkbügel 23 gegenüber der Sammelschiene 6 nicht weiter ausgeübt würde, ist in dem Klemmbügel 3 bzw. Klemmfuß 3 eine Arretiereinrichtung vorgesehen, die mit 26 bezeichnet ist und den Schwenkbügel 23 in seiner Betriebsposition hält.

Aus der vorstehenden Beschreibung ergibt sich, daß der Schwenkbügel 23 seitlich und im wesentlichen parallel zum Klemmteil 22 angeordnet ist und durch noch weiter zu beschreibende Mittel gegenüber dem Klemmteil 22 gelagert ist. Das Klemmteil 22 und der Schwenkbügel 23 befinden sich somit bei der dargestellten Ausführungsform innerhalb eines diese teilweise umgebenden Klemmfußes bzw. Klemmbügels, so daß der Klemmbügel 3 als integrierter Bestandteil des Adapter-Gehäuses 2 und somit aus Kunststoff bestehen kann, während das Klemmteil 22 und der Schwenkbügel 23 aus Metall bestehen können und damit die notwendige Festigkeit haben, um die erwünschte Klemmwirkung gegenüber den Sammelschienen 6 usw. ausüben zu können. Im Bedarfsfall können aber auch das Klemmteil 22 und der Schwenkbügel 23 aus einem jedoch relativ widerstandsfähigen bzw. festen Kunststoffmaterial oder ähnlichem bestehen.

Wie sich aus den Figuren 1 bis 3 ergibt, hat der Schwenkbügel 23 im wesentlichen die Form eines L oder die Form eines U.
Ein Schenkelabschnitt 23b dient der Anlenkung am Klemmteil 22 und ist im wesentlichen geneigt gegenüber dem Schenkelabschnitt 23a vorgesehen, während ein sich an den Schenkelabschnitt 23a anschließender und etwa bis zur Höhe des Schenkelabschnittes 23b reichender weiterer Schenkelabschnitt 23c vorgesehen ist, um die betreffende Sammelschiene 6 usw. untergreifen zu können. Auf der zum Schenkelabschnitt 23b abgewandten Seite des Schenkelabschnittes 23c ist ein Zapfen oder Vorsprung 28 angeformt, der in der in Figur 3 gezeigten Stellung des Schwenkbügels 23 durch die Arretiervorrichtung 26 erfaßbar ist, so daß der Schwenkbügel 23 gegen eine Drehung im Uhrzeigersinn in Figur 3 arretiert wird.

Die Arretiervorrichtung 26 besteht bei der in den Figuren 1 bis 3 gezeigten Ausführungsform aus einem Stift oder dergleichen, der in Figur 1 bis 3 vertikal verlagerbar ist und durch Laschen, Flansche 30 oder dergleichen gegen eine Verlagerung in Figur 3 nach unten gegenüber dem Klemmbügel 3 gesichert wird.

Entsprechend Figur 3 ist somit der Schwenkbügel 23 durch die Arretiervorrichtung 26 und durch die Anlage des die Arretiervorrichtung 26 bildenden Stiftes oder dergleichen an dem Zapfen oder Vorsprung 28 gegen eine Schwenkbewegung im Uhrzeigersinn gesichert, wodurch die erwünschte Klemmwirkung auf die in Figur 3 mit 6 bezeichnete Sammelschiene im Verhältnis zum Kontaktelement 14 ausgeübt wird. Wenn der Sammelschienen-Adapter mit den Kontaktiereinrichtungen, die auf eine Sammelschiene mit beispielsweise 5 mm gemäß Figur 3 abgestimmt sind, auf ein anderes Sammelschienensystem mit einer Dicke von beispielsweise 10 mm aufgesetzt werden soll, ist es nach Abziehen des Sammelschienen-Adapters von den Sammelschienen lediglich erforderlich, die Arretiereinrichtung 26 in Figur 3 nach unten herauszuziehen, so daß der betreffende Schwenkbügel 23 wieder in seine Position in Figur 2 verschwenkt werden kann und dies den Einsatz des Sammelschienen-Adapters bei Sammelschienen mit einer Stärke von beispielsweise 10 mm ohne weiteres wieder ermöglicht. Die Arretiervorrichtung 26 befindet sich vorzugsweise im Fußabschnitt 3a des Klemmbügels 3 und ist in einer in Figur 2 und 3 vertikalen Richtung verlagerbar.

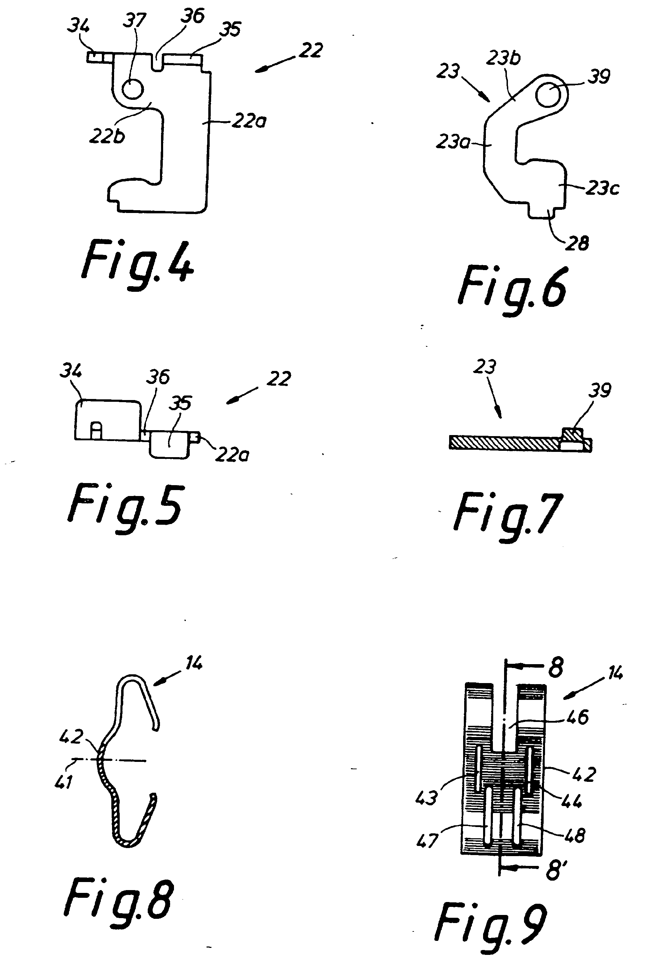

Während die Klemmbügel bzw. Klemmfüße 3, 4, 5 usw. Teile des Adapter-Gehäuses 10 sind, d.h. an der Unterseite des Gehäuses 10 fest angeordnet sind, lassen sich die aus Klemmteil 22 und Schwenkbügel 23 bestehenden Elemente separat herstellen und separat in das Gehäuse 10 einbringen. Diese Variante stellt eine bevorzugte Ausführungsform dar und weist bezüglich des Gehäuses 10 jeweils eine Öffnung 32 auf, durch die das Klemmteil 22 zusammen mit dem Schwenkbügel 23 eingesetzt wird. Weitere Einzelheiten werden nachfolgend in Verbindung mit Figur 4 bis 7 erläutert.

Figur 4 zeigt eine Seitenansicht des Klemmteiles 22. Das Klemmteil 22 hat, wie erläutert, im wesentlichen L-förmige Gestalt und ist an seiner oberen Seite mit Halteflanschen 34, 35 versehen, die im wesentlichen über einen Winkel von beispielsweise 90°C gegenüber der Fläche des Schenkels 22 umgelegt sind. Nach dem Einsetzen des Klemmteiles 22 kommen die Haltelaschen 34, 35 in einer zu den Sammelschienen 6, 7, 8 parallelen Ebene auf den Verbindungsschienen 18, 19, 20 entsprechend zur Auflage und begrenzen damit die Einschubbewegung des Klemmteiles 22 in Figur 2 und 3 nach unten in Richtung auf den Klemmbügel 3 bzw. den Klemmfuß 3.

Um eine derartige Halterung des Klemmteiles 22 sicherzustellen, kann die Verbindungsschiene 18 mit einer entsprechenden Ausnehmung versehen sein, die das Durchführen des Klemmteiles 22 zusammen mit seinem Schwenkbügel 23 ermöglicht, jedoch so klein ist, daß die Haltelaschen 34, 35 seitlich über die betreffende Verbindungsschiene übersteht, um die Begrenzung der Bewegung des Klemmteiles nach unten sicherzustellen.

Die Haltelaschen 34, 35 sind im Verhältnis zum L-förmigen Schenkelabschnitt 22a des Klemmteiles 22 in zueinander entgegengesetzten Richtungen umgebogen und vorzugsweise durch eine Ausnehmung bzw. Vertiefung 36 voneinander getrennt. Auf diese Weise läßt sich das Umbiegen der Haltelaschen 34, 35 leicht und einfach durchführen und die Lage jedes Klemmteiles 22 wird durch die zueinander wegweisenden Haltelaschen 34, 35 in der Vertikalen automatisch zentriert.

In dem Klemmteil 22 ist gemäß Figur 4 vorzugsweise im oberen Schenkelabschnitt 22b eine kreisförmige Öffnung 37 ausgebildet, die zur Aufnahme eines entsprechenden Zapfens 39 dient, der seitlich an dem Schwenkbügel 23 vorgesehen ist, wie dies aus den Figuren 6 und 7 ersichtlich ist. Der in Figur 6 und 7 gezeigte Schwenkbügel 23 hat eine gegenüber dem Klemmteil 22 weitgehend ähnliche Form, jedoch insgesamt kürzere Länge bzw. Höhe aus den vorstehend bereits genannten Gründen wegen der Anpassung auf Stromschienen mit etwa hälftiger Dicke von beispielsweise 5 mm, während das Klemmteil 22 auf Sammelschienen mit einer Dicke von beispielsweise 10 mm abgestimmt ist.

Soweit der Schwenkbügel 23 vorstehend beschrieben ist, sind in Figur 6 und 7 gleiche Bezugszeichen zur Bezeichnung gleicher Teile oder Abschnitte verwendet worden, die hiermit nicht nochmals wiederholt werden müssen. Wie Figur 7 zeigt, ist der Zapfen 39 vorzugsweise einseitig am Schwenkbügel 23 ausgebildet. Zur mechanischen Verbindung von Schwenkbügel 23 und Klemmteil 22 wird der Schwenkbügel 23 mittels seines Zapfens 39 in die Öffnung 37 des Klemmteiles 22 eingesetzt und verstemmt. Es sind auch andere mechanische Verbindungen möglich, die eine Verschwenkbarkeit des Schwenkbügels 23 gegenüber dem Klemmteil 22 sicherstellen, wie beispielsweise Nieten, Schrauben oder dergleichen.

Der Schwenkbügel 23 ist gemäß dieser Ausführungsform über die mit 24 bezeichnete und durch den Zapfen 39 definierte Achse parallel zum Klemmteil 22 verstellbar.

Anstelle der in Verbindung mit Figur 2 und 3 beschriebenen Arretiervorrichtung 26, die nach Art eines Stiftes in den Bewegungsweg des Schwenkbügels 23 verlagerbar ist, kann eine in einer zur Arretiereinrichtung 26 senkrechten Richtung operativ eingreifbare, abgewandelte Arretiervorrichtung vorgesehen sein.

Die Figuren 8 und 9 zeigen eine bevorzugte Ausführungsform einer Kontaktlamelle zum Einsatz als Kontaktelemente 14, 15, 16, die in Figur 8 und 9 mit 14 bezeichnet ist. Figur 8 ist hierbei eine Schnittansicht entlang der Linie 8 - 8 in Figur 9.

Wie sich aus Figur 8 und 9 ergibt, ist die mit 14 bezeichnete Kontaktlamelle vom Profil (Figur 8) spiegelsymmetrisch zu einer Achse 41 ausgebildet und besitzt einen mittigen, bauchförmigen Kontaktabschnitt, der seitlich durch Schlitze 43, 44 unterbrochen ist. Diese Kontaktlamelle bzw. das Kontaktelement 14 gemäß Figur 8 und 9 bildet durch diese schlitzförmige Gestaltung ein federndes Kontaktelement mit einer im Bereich 42 gewölbten Unterseite als Kontaktabschnitt für die zugehörige Sammelschiene. Mittig des Kontaktelementes ist eine gegenüber den Schlitzen 43, 44 breitere Aussparung 46 vorgesehen, während auf der gegenüberliegenden Seite weitere Schlitze 47, 48 ausgebildet sind, die nur geringfügig breiter als die Schlitze 43, 44 gewählt sind und die bezüglich der flächigen Darstellung nach Figur 9 zwischen den Schlitzen 43, 44 und diese teilweise übergreifend angeordnet sind. Die erfindungsgemäße Kontaktlamelle 14 hat eine hohe Federsteifigkeit und dennoch gute Federeigenschaft und dient zur Kontaktierung gegenüber der Sammelschiene, wodurch ein schraubenloses, metallisches Kontaktierungspaket zwischen Sammelschiene und adaptierten Gerät ermöglicht wird.

Erfindungsgemäß ist vorgesehen, daß der Sammelschienen-Adapter standardmäßig für eine Schienendicke von 5 mm eingestellt ist, d.h. daß die Schwenkbügel 23 durch die jeweilige Arretiervorrichtung 26 in die in Figur 3 gezeigte Position eingestellt sind. Wenn der Installateur eine Schiene mit einer Stärke von 5 mm vor Ort vorfindet, kann er den Adapter sofort auf die Sammelschienen 6, 7, 8 aufziehen. Ist der Adapter jedoch auf Sammelschienen mit einer Dicke von 10 mm zu montieren, wird die Arretiervorrichtung 26 nach unten (Figur 2 und 3) gezogen, so daß ein Zurückschwenken der Schwenkbügel 23 möglich ist und das Aufstecken des Adapters auf die 10 mm dicken Sammelschienen ermöglicht.

Beim Aufziehen des Adapters auf Sammelschienen mit einer Dicke von 10 mm stoßen die Schwenkbügel 23 an den Sammelschienen an und werden über den Drehpunkt in die in Figur 2 gezeigte Endlage verschwenkt. Somit wird jede Sammelschiene mit einer Dicke von 10 mm voll mit dem dafür vorgesehenen Klemmteil 22 getragen.

## Patentansprüche

1. Kontaktiereinrichtung, insbesondere für Sammelschienen Adapter (1),
mit Klemmbügeln (3, 4, 5) zur klemmenden Aufnahme von Abschnitten von Sammelschienen (6, 7, 8),
mit elektrischen Kontaktelementen (14, 15, 16), die zumindest bereichsweise über an der Unterseite des Adapters ausgebildete Öffnungen durch die Sammelschienenabschnitte elektrisch kontaktierbar sind,
**dadurch gekennzeichnet,**
**daß** jeder Klemmbügel (3, 4, 5) ein im wesentlichen L-förmiges Klemmteil (22) und einen an diesem verstellbar angelenkten Schwenkbügel (23) aufweist,
wobei die Schenkellänge des verstellbaren Schwenkbügels (23) gegenüber der Schenkellänge des Klemmteiles (22) unterschiedlich dimensioniert ist.

2. Kontaktiereinrichtung nach Anspruch 1,
**dadurch gekennzeichnet,**
**daß** der Schwenkbügel (23) parallel gegenüber dem Klemmteil (22) verschwenkbar ist.

3. Kontaktiereinrichtung nach Anspruch 1 oder 2,
**dadurch gekennzeichnet,**
**daß** jeder Klemmbügel (3, 4, 5) eine Arretiereinrichtung (26) zum Feststellen eines Schwenkbügels (23) in einer vorbestimmten Position enthält.

4. Kontaktiereinrichtung nach Anspruch 3,
**dadurch gekennzeichnet,**
**daß** die Arretiereinrichtung (26) im Fußabschnitt jedes Klemmbügels (3, 4, 5) ausgebildet ist.

5. Kontaktiereinrichtung nach wenigstens einem der vorangehenden Ansprüche,
**dadurch gekennzeichnet,**
**daß** die Arretiereinrichtung (26) ein stift- oder bolzenförmiges Sperrglied aufweist.

6. Kontaktiereinrichtung nach einem der vorangehenden Ansprüche,
**dadurch gekennzeichnet,**
**daß** der Schwenkbügel (23) über einen Zapfen (39) schwenkfähig in eine Lageröffnung (37) des Klemmteiles (22) eingesetzt ist.

7. Kontaktiereinrichtung nach wenigstens einem der vorangehenden Ansprüche,
**dadurch gekennzeichnet,**
**daß** der Schwenkbügel (23) mit einem Vorsprung (28) oder dergleichen versehen ist, der mit der Arretiereinrichtung (26) in Eingriff bringbar ist.

8. Kontaktiereinrichtung nach wenigstens einem der vorangehenden Ansprüche,
**dadurch gekennzeichnet,**
**daß** das Klemmteil (22) mit umgebogenen Haltelaschen (34, 35) versehen ist.

9. Kontaktiereinrichtung nach wenigstens einem der vorangehenden Ansprüche,
**dadurch gekennzeichnet,**
**daß** das Klemmteil (22) zusammen mit dem Schwenkbügel (23) über eine Öffnung (32) im Gehäuse (10) in dieses eingesetzt sind.

10. Kontaktiereinrichtung nach wenigstens einem der vorangehenden Ansprüche,
**dadurch gekennzeichnet,**
**daß** die Haltelaschen (34, 35) des Klemmteiles (22) gegenüber dem Klemmteil (22) umgebogen sind.

11. Kontaktiereinrichtung nach Anspruch 10,
**dadurch gekennzeichnet,**
**daß** die Haltelaschen (34, 35) in zueinander entgegengesetzten Richtungen weisen.

## Claims

1. A contacting device, especially for a bus bar adapter (1), comprising
retaining clips (3, 4, 5) for receiving portions of bus bars (6, 7, 8) in a retaining manner,
electrical contact elements (14, 15, 16), which can be contacted electrically by the bus bar portions at least portion-wise via openings formed on the lower side of the adapter (1),
**characterized in that**
each retaining clip (3, 4, 5) has a substantially L-shaped retaining part (22) and a pivoted clip (23) articulated to the same in an adjustable manner,
wherein the length of the leg of the adjustable pivoted clip (23) is dimensioned differently with respect to the length of the leg of the retaining part (22).

2. A contacting device according to claim 1,
**characterized in that**
the pivoted clip (23) is pivotable parallel with respect to the retaining part (22).

3. A contacting device according to claim 1 or 2,
**characterized in that**
each retaining clip (3, 4, 5) includes a locking device (26) for securing a pivoted clip (23) in a predetermined position.

4. A contacting device according to claim 3,
**characterized in that**
the locking device (26) is formed in the foot portion of each retaining clip (3, 4, 5).

5. A contacting device according to at least one of the preceding claims,
**characterized in that**
**that** the locking device (26) comprises a pin or bolt-shaped locking member.

6. A contacting device according to one of the preceding claims,
**characterized in that**
the pivoted clip (23) is inserted pivotably by means of a journal (39) in a bearing aperture (37) of the retaining part (22).

7. A contacting device according to at least one of the preceding claims,
**characterized in that**
**that** the pivoted clip (23) is provided with a projection (28) or the like, which is engageable with the locking device (26).

8. A contacting device according to at least one of the preceding claims,
**characterized in that**
**that** the retaining part (22) is provided with bent over holding lugs (34, 35).

9. A contacting device according to at least one of the preceding claims,
**characterized in that**
**that** the retaining part (22) together with the pivoted clip (23) is inserted in the housing (10) via an opening in the same.

10. A contacting device according to at least one of the preceding claims,
**characterized in that**
**that** the holding lugs (34, 35) of the retaining part (22) are bent over with respect to the retaining part (22).

11. A contacting device according to claim 10,
**characterized in that**
the holding lugs (34, 35) are facing in opposition directions with respect to each other.

## Revendications

1. Dispositif de mise en contact, notamment pour adaptateur (1) de barres de distribution, comportant des étriers de serrage (3, 4, 5) pour le logement par serrage de segments de barres de distribution (6, 7, 8), comportant des éléments de contact électrique (14, 15, 16) qui sont aptes à être mis en contact électrique par les segments de barres de distribution au moins par zones par l'intermédiaire d'ouvertures réalisées sur la face inférieure de l'adaptateur (1), **caractérisé en ce que** chaque étrier de serrage (3, 4, 5) présente un élément de serrage (22) sensiblement en L et un étrier pivotant (23) articulé sur ce dernier de manière réglable, la longueur de branche de l'étrier pivotant réglable (23) étant dimensionnée pour être différente de la longueur de branche de l'élément de serrage (22).

2. Dispositif de mise en contact selon la revendication 1, **caractérisé en ce que** l'étrier pivotant (23) peut pivoter parallèlement à l'élément de serrage (22).

3. Dispositif de mise en contact selon la revendication 1 ou 2, **caractérisé en ce que** chaque étrier de serrage (3, 4, 5) comprend un dispositif d'arrêt (26) pour le blocage d'un étrier pivotant (23) dans une position prédéterminée.

4. Dispositif de mise en contact selon la revendication 3, **caractérisé en ce que** le dispositif d'arrêt (26) est réalisé dans le segment de pied de chaque étrier de serrage (3, 4, 5).

5. Dispositif de mise en contact selon au moins une des revendications précédentes, **caractérisé en ce que** le dispositif d'arrêt (26) présente un organe de verrouillage en forme de goupille ou de goujon.

6. Dispositif de mise en contact selon une des revendications précédentes, **caractérisé en ce que** l'étrier pivotant (23) est placé dans une ouverture de montage (37) de l'élément de serrage (22) pour pouvoir pivoter par l'intermédiaire d'un pivot (39).

7. Dispositif de mise en contact selon au moins une des revendications précédentes, **caractérisé en ce que** l'étrier pivotant (23) est muni d'un épaulement (28) ou similaire qui peut être mis en prise avec le dispositif d'arrêt (26).

8. Dispositif de mise en contact selon au moins une des revendications précédentes, **caractérisé en ce que** l'élément de serrage (22) est muni de pattes de fixation recourbées (34, 35).

9. Dispositif de mise en contact selon au moins une des revendications précédentes, **caractérisé en ce que** l'élément de serrage (22) est placé avec l'étrier pivotant (23) dans le boîtier (10) en passant par une ouverture (32) prévue dans ce dernier.

10. Dispositif de mise en contact selon au moins une des revendications précédentes, **caractérisé en ce que** les pattes de fixation (34, 35) de l'élément de serrage (22) sont recourbées par rapport à l'élément de serrage (22).

11. Dispositif de mise en contact selon la revendication 10, **caractérisé en ce que** les pattes de fixation (34, 35) sont orientées dans des sens opposés l'une par rapport à l'autre.
